(19) **Europäisches Patentamt**

**European Patent Office**

**Office européen des brevets**

(11) **EP 1 451 030 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **02787654.9**

(22) Anmeldetag: **12.11.2002**

(51) Int Cl.:
**B60G 17/015** *(2006.01)*   **B61F 5/22** *(2006.01)*

(86) Internationale Anmeldenummer:
**PCT/EP2002/012635**

(87) Internationale Veröffentlichungsnummer:
**WO 2003/043840 (30.05.2003 Gazette 2003/22)**

(54) **POSITIONSEINSTELLUNG EINES FAHRZEUG-WAGENKÖRPERS**

POSITION ADJUSTMENT OF A VEHICLE CAR BODY

REGLAGE DE POSITION D'UN CORPS DE VOITURE D'UN VEHICULE

(84) Benannte Vertragsstaaten:
**AT BE BG CH CY CZ DE DK EE ES FI FR GB GR IE IT LI LU MC NL PT SE SK TR**

(30) Priorität: **23.11.2001 DE 10157368**

(43) Veröffentlichungstag der Anmeldung:
**01.09.2004 Patentblatt 2004/36**

(73) Patentinhaber: **Bombardier Transportation GmbH 13627 Berlin (DE)**

(72) Erfinder: **STREITER, Ralph 70193 Stuttgart (DE)**

(74) Vertreter: **Meyer, Hans-Joachim COHAUSZ & FLORACK Patent- und Rechtsanwälte Bleichstrasse 14 40211 Düsseldorf (DE)**

(56) Entgegenhaltungen:
DE-A- 19 820 865   DE-U- 9 422 124
FR-A- 2 633 887   GB-A- 2 079 701

• HIRATA T ET AL: "H00 CONTROLL OF RAILROAD VEHICLE ACTIVE SUSPENSION" PROCEEDINGS OF THE CONFERENCE ON DECISION AND CONTROL. SAN ANTONIO, DEC. 15 - 17, 1993, NEW YORK, IEEE, US, Bd. 3 CONF. 32, 15. Dezember 1993 (1993-12-15), Seiten 2937-2942, XP000481451 ISBN: 0-7803-1298-8

**Beschreibung**

Die Erfindung betrifft ein Verfahren zur Positionseinstellung eines Wagenkörpers eines spurgeführten Fahrzeuges, insbesondere eines Schienenfahrzeuges, relativ zu zumindest einem Fahrwerk des Fahrzeuges.

Beim Betrieb von Schienenfahrzeugen treten insbesondere durch Ungenauigkeiten und Fehler der Schienenausrichtung und Schienenlage ungewollte Querbewegungen auf, die vor allem von Fahrgästen als störend empfunden werden. Bei Fahrwerken mit konventionellen, passiven Feder- und Dämpfungssystemen führt dies bei einer Kurvenfahrt zu einer weiteren Komfortverschlechterung, da sich der Wagenkörper quer zur Fahrtrichtung bzw. seiner Längsrichtung nach außen verlagert und die Querfederung daher in einem Bereich mit höherer Federsteifigkeit arbeitet.

Zur Überwindung dieser Nachteile rein passiver Einrichtungen sind aktive, regelbare Systeme vorgeschlagen worden, die der Querverlagerung entgegenwirken. Bekannte Positioniereinrichtungen, die zwischen Fahrwerk und Wagenkörper angebracht sind, üben bei Fahrt in Gleisbögen eine lateral wirkende Kraft auf den Wagenkörper aus, die diesen in Richtung auf die mittige Position gegenüber dem Fahrwerk bewegt. Dadurch steht wieder der volle Federweg der Querfederung zur Verfügung und Anschläge an seitliche Pufferelemente, die den zur Verfügung stehenden Querweg begrenzen, werden weitgehend vermieden. Ein derartiges Verfahren einschließlich zugehöriger Positioniereinrichtung ist beispielsweise in der FR 2 633 887 A1 offenbart. In der FR 2 633 887 A1 ist hinsichtlich des Zweckes der darin offenbarten Positioniereinrichtung allerdings nicht eine Erhöhung des Fahrkomforts, sondern die Vermeidung von Verletzungen des Lichtraums durch die Wagenkontur bei Querverlagerung genannt. Bei der aus der FR 2 633 887 A1 bekannten Positioniereinrichtung erfolgt die seitliche Positionierung des Wagenkastens, der über pneumatische Sekundärfederelemente auf dem jeweiligen Drehgestell abgestützt ist, mittels eines hydraulischen Stellelementes, das zwischen den Sekundärfederelementen am Drehgestell gelagert ist. Zusätzlich sind zwei in vertikaler Richtung wirkende hydraulische Stellelemente vorhanden, die an den Außenseiten des Wagenkastens und des Drehgestells angelenkt sind und mit denen eine gewisse Neigung des Wagenkastens eingestellt werden kann.

Um eine hohe Querelastizität der Kopplung zwischen Fahrwerk und Wagenkörper zu erreichen, werden beispielsweise pneumatische Aktuatoren mit hoher Elastizität als Stelleinrichtung verwendet. Nachteilig ist hieran ein großes Bauvolumen.

Die DE 198 20 865 A1 offenbart ein aktives Abstützsystem für schienengebundene Fahrzeuge, das zwischen einem Drehgestell und einem Wagenkasten des Fahrzeuges angeordnet ist. Dieses bekannte Abstützsystem ist im Wesentlichen dadurch gekennzeichnet, dass keine passiven Dämpfer, d.h. keine hydraulischen Dämpfer oder Reibungsdämpfer für die Sekundärfederung verwendet werden, um den Wagenkasten zu dämpfen. Bei diesem aktiven Abstützsystem wird also die Bewegung des Wagenkastens gegenüber dem Fahrwerk in allen drei Raumrichtungen unter völligem Verzicht auf passive Dämpfer durch aktive Steller (Aktoren) vorgegeben bzw. geregelt, die unterhalb der als Sekundärfederung wirkenden Luftfedern angeordnet sind. Dies bedingt einen grundsätzlich anderen Aufbau der Schnittstelle Fahrwerk - Wagenkasten gegenüber konventionellen Fahrwerken, da in diesem Falle nicht nur Vertikal- und Querkräfte, sondern auch die in Längsrichtung wirkenden Traktions- und Bremskräfte allein von den Luftfedern übertragen werden müssen.

Aus der deutschen Offenlegungsschrift 20 40 922 ist es bekannt, die Position eines Wagenkörpers gegenüber zwei in Fahrtrichtung endseitig angeordneten Fahrwerken zu regeln. Dabei erfassen Querbeschleunigungssensoren in den Endbereichen des Wagenkörpers die auftretenden Querbeschleunigungswerte und steuern abhängig davon mittels Aktuatoren die relative Lage des Wagenkörpers zu den Fahrwerken ein.

Der vorliegenden Erfindung liegt die Aufgabe zugrunde, ein Verfahren zur Positionseinstellung eines Wagenkörpers eines spurgebundenen Fahrzeuges relativ zu einem Fahrwerk des Fahrzeuges anzugeben, mit dem sich der Fahrkomfort erhöhen lässt.

Erfindungsgemäß wird diese Aufgabe durch das Verfahren mit den Merkmalen des Anspruchs 1 gelöst.

Der vorliegenden Erfindung liegt die Erkenntnis zugrunde, dass es für einen hohen Fahrkomfort nicht ausreicht, lediglich die Querbeschleunigung eines Wagenkörpers in einer einzigen Richtung zu erfassen und davon abhängig die Querposition des Wagenkörpers relativ zu einem Fahrwerk einzustellen. Wenn der Wagenkörper beispielsweise wegen einer Gleislagestörung eine Querbeschleunigung in etwa horizontaler Richtung erfährt, wird in den meisten Fällen gleichzeitig eine Wankbewegung des Wagenkörpers, das heißt eine Drehbewegung um eine etwa in Fahrtrichtung weisende Längsachse des Wagenkörpers, angeregt. Allgemein formuliert hat der Wagenkörper für Bewegungen quer zu seiner Längsachse mehr als einen Freiheitsgrad. Wird nur die Beschleunigung in einer Querrichtung erfasst, können als störend empfundene beschleunigte Bewegungen in andere Querrichtungen als die erfasste Querrichtung nicht kompensiert werden.

Hinzu kommt, dass durch eine Rückstellung des Wagenkörpers in eine Mittellage relativ zum Fahrwerk zusätzliche Wankbewegungen, insbesondere Schwingungen, angeregt werden können. Dies gilt besonders für den üblichen Fall, dass ein Aktuator zur Einstellung der Querposition des Wagenkörpers unterhalb des Wagenkörperbodens und damit weit unterhalb des Wagenkörperschwerpunktes angeordnet ist.

Bei bekannten Systemen, die nur in einer Querrichtung die Querbeschleunigung messen, konnte in derartigen als besonders störend empfundenen Frequenzbereichen nicht aktiv eingegriffen werden, da die oben genannten Wankbewegungen genau dann resonant angeregt werden können. Steht keine Information über die Wankbewegung zur Verfügung, bleibt nur die Möglichkeit, in den kritischen Frequenzbereichen gar nicht einzugreifen. Der Bereich von Frequenzen, in dem bisher aktiv eingegriffen werden konnte, lag deutlich unter 1 Hz.

Es können außer Wankbewegungs-Schwingungen auch andere Schwingungen auftreten, insbesondere in etwa horizontaler Richtung, und/oder Wendebewegungs-Schwingungen, d.h. um eine Hochachse des Wagenkörpers. Es ist bekannt, dass Schwingungen in einem bestimmten Frequenzbereich, meist um 3 Hz, von Personen in dem Wagenkörper als besonders störend empfunden werden, wohingegen Schwingungen mit größerer und/oder kleinerer Frequenz nicht als gleichermaßen störend empfunden werden. Eine weitere Erkenntnis der Erfindung ist, dass es als besonders störend empfunden wird, wenn Schwingungen in verschiedene Richtungen und/oder Drehschwingungen um verschiedene Achsen auftreten und diese Schwingungen unterschiedliche Frequenzen aufweisen. Es ist möglich aufgrund der Erfindung, Schwingungen mit solchen störenden Frequenzen und/oder Frequenzkombinationen zu dämpfen und/oder zu vermeiden.

Die Erfindung ermöglicht einen höheren Fahrkomfort, indem die Querbeschleunigung in zumindest zwei verschiedenen Richtungen quer zur Wagenkörper-Längsachse ermittelt wird. Beispielsweise wird die Querbeschleunigung in einer ersten Querrichtung ermittelt, die bei ungestörter Geradeausfahrt des Fahrzeuges in der Horizontalen liegt, und wird die Querbeschleunigung außerdem in einer etwa senkrecht dazu stehenden zweiten Querrichtung ermittelt. Querbeschleunigungssensoren, die verwendet werden können, sind bekannt. Es wird insbesondere die absolute Querbeschleunigung ermittelt. Unter "absolut" wird verstanden, dass die Querbeschleunigung bezogen auf ein Inertialsystem ermittelt wird. Es ist nicht zwingend erforderlich, alle Komponenten der Beschleunigung zu ermitteln.

Erfindungsgemäß wird die zweite und/oder zumindest eine höhere zeitliche Ableitung der Querbeschleunigung des Wagenkörpers gebildet und davon abhängig die Querposition des Wagenkörpers eingestellt. Die Querbeschleunigung des Wagenkörpers selbst und deren erste Ableitung sind zur Einstellung der Querposition weniger gut geeignet, da sowohl eine zeitlich konstante Querbeschleunigung als auch eine zeitlich konstante erste Ableitung bei Kurvenfahrten aufgrund der Spurführung vorkommen können. Dennoch ist es auch möglich, insbesondere außerhalb von Kurvenfahrten, auch die Querbeschleunigung und/oder deren erste Ableitung zu verwenden.

Entsprechend wird für eine Regelung der Gierbewegung des Wagenkörpers bevorzugt, dass aus den ermittelten Werten der Querbeschleunigungen des Wagenkörpers an zumindest zwei verschiedenen Stellen und/oder Bereichen in Längsrichtung des Wagenkörpers die erste und/oder zumindest eine höhere zeitliche Ableitung einer Wendebeschleunigung des Wagenkörpers um eine Hochachse berechnet wird und davon abhängig die relative Querposition an zwei verschiedenen Stellen in Längsrichtung des Wagenkörpers eingestellt wird.

Abhängig von der Stellgröße, die zur Einstellung der Querposition(en) des Wagenkörpers berechnet wird, kann es aus regelungstechnischen Gründen günstig sein, jeweils eine noch um eine Stufe höhere Ableitung zu verwenden. Zum Beispiel kann die Stellgröße ein Volumenstrom eines hydraulischen Ventils sein, das den Strom einer Hydraulikflüssigkeit in und/oder aus einer hydraulischen Stelleinrichtung steuert. In diesem Fall entspricht ein konstanter Volumenstrom einer andauernden Veränderung der relativen Querposition. Die Stelleinrichtung zeigt somit ein integrierendes Verhalten, das zweckmäßigerweise bei der Regelung mit berücksichtigt werden sollte.

Insbesondere kann die Anregung einer Wankbewegung unmittelbar festgestellt werden. Weiterhin ermöglicht die wesentlich genauere Kenntnis des Bewegungszustandes des Wagenkörpers eine voreilende, das heißt in die Zukunft extrapolierende Berechnung.

Bei einer bevorzugten Ausführungsform des erfindungsgemäßen Verfahrens wird darüber hinaus bei einer Ermittlung einer Stellgröße zur Einstellung der relativen Querposition des Wagenkörpers zumindest eine Kenngröße des Bewegungsverhaltens des Wagenkörpers berücksichtigt, insbesondere eine Kenngröße für die Anregung von Schwingungen des Wagenkörpers, und/oder wird durch wiederholte Auswertung von Messgrößen und durch zeitliche Extrapolation des Bewegungsverhalten des Wagenkörpers ein möglicher zukünftiger Bewegungszustand des Wagenkörpers berechnet und bei der Ermittlung der Stellgröße berücksichtigt. Die Berücksichtigung von Informationen über das Bewegungsverhalten des Wagenkörpers setzt zwar die einmalige Erfassung und Eingabe der zumindest einen Kenngröße (z.B. einer statischen oder dynamischen) für das Bewegungsverhalten voraus, ermöglicht jedoch einen hohen Fahrkomfort. Unter Kenngröße wird auch ein Parameter für einen Regelalgorithmus verstanden, durch den das Bewegungsverhalten, insbesondere die Verkopplung von unterschiedlichen Schwingungsbewegungen berücksichtigt ist. Bezüglich der Anregung einer Wankbewegung haben Versuche und Simulationen gezeigt, dass es ausreicht, einen oder mehrere Aktuatoren zu verwenden, die eine Einstellung der relativen Querposition des Wagenkörpers nur in einer Querrichtung ermöglichen, beispielsweise der horizontalen Richtung bei ungestörter Geradeausfahrt. Eine erfindungsgemäße Regelung kann die Anregung einer Schwingungsbewegung um die Längsachse des Wagenkörpers vermeiden, z.B. durch entsprechende wiederholte Einstellung der Querposition in etwa horizontaler Richtung. Insbesondere werden Veränderungen der Querposition hinsichtlich der Frequenz und/oder Amplitude vermieden, die eine Resonanzschwingung des Wagenkörpers anregen würden.

Bei einer Ausführungsform des Verfahrens werden bezüglich der relativen Querposition des Wagenkörpers Frequenzbereiche betrachtet und beeinflusst mit Frequenzen kleiner oder gleich 10 Hz, insbesondere kleiner oder gleich 7 Hz. Damit werden noch höhere Frequenzbereiche vermieden, in denen die Gefahr besteht, dass ein ruhiges Laufverhalten des Fahrgestells beeinträchtigt wird. Außerdem wird so gegenüber einer höherfrequenten Regelung Energie gespart.

Bevorzugt werden bezüglich der Querposition des Wagenkörpers Frequenzbereiche betrachtet und beeinflusst mit einer Frequenz kleiner oder gleich 4 Hz, insbesondere kleiner oder gleich 2 Hz, und wird die Querbeschleunigung des Wagenkörpers in einem Frequenzbereich mit einer höheren Frequenz ausgewertet und bei der Einstellung der relativen Querposition berücksichtigt. Dies ermöglicht eine im Vergleich zu vorbekannten Lösungen schnelle Reaktion auf Auslenkungen des Wagenkörpers in Querrichtung, insbesondere durch Einfahrt in Kurven. Dennoch können durch die Betrachtung der Querbeschleunigung in einem höheren Frequenzbereich hohe Schwingungsamplituden in diesem höheren Frequenzbereich vermieden werden. Insbesondere ist dieser Frequenzbereich ein Bereich, in dem Schwingungen, z.B. nach einer ISO-Norm, als besonders störend oder unerwünscht eingestuft werden. Die Trennung der Frequenzbereiche für die Betrachtung bzw. Auswertung der Querposition und der Querbeschleunigung ermöglicht eine stabile Regelung sowohl hinsichtlich der Vermeidung/Dämpfung von Schwingungen als auch hinsichtlich der Regelung der Querposition.

Bei einer Ausführungsform wird die Querbeschleunigung des Wagenkörpers für zumindest zwei verschiedene Stellen und/oder Bereiche in Längsrichtung des Wagenkörpers ermittelt und wird abhängig davon die relative Querposition des Wagenkörpers an zwei verschiedenen Stellen in Längsrichtung des Wagenkörpers eingestellt. Dies ermöglicht insbesondere eine Regelung einer Wendebewegung (Gierbewegung) des Wagenkörpers um eine Hochachse (z. B. eine in vertikaler Richtung verlaufende Achse). Hierzu kann aus den ermittelten Werten der Querbeschleunigungen des Wagenkörpers an den zumindest zwei verschiedenen Stellen eine Wendebeschleunigung des Wagenkörpers um die Hochachse berechnet werden und bei der Einstellung der relativen Querposition(en) des Wagenkörpers berücksichtigt werden. Der Fahrkomfort kann dadurch noch erhöht werden.

Insbesondere kann die Querposition des Wagenkörpers relativ zu dem zumindest einen Fahrwerk eine Mittelstellung für Geradeausfahrt des Fahrzeuges haben. Es ist nicht zwangsläufig erforderlich, den Wagenkörper bei Kurvenfahrten in die Mittelstellung zurückzustellen. Die Regelung kann beispielsweise feststellen, dass eine vollständige Rückstellung für den Fahrkomfort nicht günstig ist. Es kann auch wünschenswert sein, eine vollständige Rückstellung zu vermeiden, um Energie für die Stellarbeit zu sparen.

Aufgrund einer Regelung, die schnell reagiert und/oder Schwingungen dämpft und/oder verhindert, kann die Querfederung ganz generell weicher ausgelegt werden, da die Gefahr eines Anstoßens an Endanschläge, die den möglichen Querweg begrenzen, verringert ist. Die Vertikalfederung zwischen Wagenkörper und Fahrwerk erfüllt in vielen Fällen auch teilweise die Funktion einer Querfederung. Luftfedern zwischen Wagenkörper und Fahrwerk sind für die Vertikalfederung zwischen Wagenkörper und Fahrwerk besonders komfortabel, tragen jedoch mit geringer Federkraft zur Querfederung bei. Ein Vorteil einer solchen Regelung besteht daher darin, dass weiche Luftfedern auch für eine Vertikalfederung zwischen Wagenkörper und Fahrwerk verwendet werden können. Umgekehrt muss die Regelung deshalb weniger häufig und/oder weniger stark auf eingeleitete Störungen oder Stöße reagieren.

Ein Aktuator zur Einstellung der relativen Querposition zwischen Wagenkörper und Fahrwerk weist beispielsweise eine hydropneumatische Vorrichtung auf mit einem Behälter, der eine einen Gas enthaltenden Raum und einen Flüssigkeit enthaltenden Raum trennende Membran aufweist, und mit einer Drossel, die einen Volumenstrom in den und/oder aus dem Flüssigkeit enthaltenden Raum von und/oder zu einem Vorratsbehälter drosselt. Ein solcher Aktuator kann zur Abfederung von Stößen in Querrichtung herangezogen werden, die über das Fahrwerk eingeleitet werden.

In manchen Fällen ist es wünschenswert, nicht nur einen Aktuator zur Einstellung einer relativen Querposition des Wagenkörpers zu verwenden. Beispielsweise kann in manchen Fällen der Aktuator aus konstruktionstechnischen Gründen nur so angeordnet werden, dass bei seiner Betätigung ein Drehmoment zwischen Wagenkörper und Fahrwerk wirkt. Es wird daher vorgeschlagen, dass eine Einrichtung zur Einstellung der relativen Querposition einen ersten Aktuator und einen zweiten Aktuator aufweist, wobei die Aktuatoren derart ausgerichtet und angeordnet sind, dass sie die Querposition des Wagenkörpers in einer gemeinsamen Querrichtung verändern können, wobei die Aktuatoren jeweils durch Aufbringen eines Arbeitsdruckes einander entgegenwirkend betätigbar sind und wobei die Einrichtung ein Mittel zum Einstellen und/oder Begrenzen der Summe der Arbeitsdrücke aufweist.

Zusätzlich zu der oben beschriebenen Messung der absoluten Querbeschleunigung(en) wird vorgeschlagen, auch die Position des Wagenkörpers relativ zum Fahrwerk oder zu den Fahrwerken zu messen. Insbesondere kann die Einrichtung zur Einstellung der relativen Querposition eine Positions-Messeinrichtung zur Messung einer Position des Wagenkörpers relativ zu dem zumindest einen Fahrwerk aufweisen, wobei die Positions-Messeinrichtung Mittel zum Messen der relativen Position bezüglich zweier Freiheitsgrade für Bewegungen quer zur Wagenkörper-Längsachse aufweist.

Insbesondere kann die Positions-Messeinrichtung einen ersten Querpositionssensor zur Messung der relativen Querposition des Wagenkörpers aufweisen, der die Querposition in einer ersten Querrichtung quer zu der Wagenkörper-Längsachse misst, und kann die Positions-Messeinrichtung einen zweiten Querpositionssensor zur Messung der relativen Querposition des Wagenkörpers aufweisen, der die Querposition in einer zweiten Querrichtung quer zu der Wagenkörper-Längsachse und quer zu der ersten Querrichtung misst.

Weiterhin kann die Einrichtung zumindest zwei der Positions-Messeinrichtungen, zur Messung der relativen Position an verschiedenen Stellen oder in verschiedenen Bereichen in Längsrichtung des Wagenkörpers aufweisen.

Es wird auch vorgeschlagen, durch die Kombination von einer schnell wirkenden Hardware und einer intelligenten Software die am Wagenkörper auftretenden Querbeschleunigungen und Wendebeschleunigungen unabhängig voneinander zu reduzieren, wobei gemeinsame Stellglieder zur Einstellung der Querposition(en) verwendet werden können.

Spezielle Ausprägung dieser Erfindung ist eine zu der Hardwarestruktur angepasste Regelung, die die Verkopplung zwischen Wank- und Querbewegung berücksichtigt und auf diese Weise eine Regelung der Querbewegung hinsichtlich der Minimierung der Wagenkörperquerbeschleunigung und der Querauslenkung des Wagenkörpers in seinem Schwerpunkt ermöglicht sowie eine Stabilisierung der Wankbewegung erzielt. Ohne eine Berücksichtigung der Verkopplung von Quer- und Wankbewegung, die insbesondere aus dem konstruktiven Umstand resultiert, dass die eingesetzten Queraktuatoren nicht in Richtung des Wagenkörperschwerpunktes wirken, führt eine im Sinne des Querfahrkomforts und hier speziell der ISO-Richtlinie 2631 höherfrequente Regelung zwangsweise zu einem Anfachen der Wankbewegung in der Weise, dass keine stabile Regelung möglich ist.

Ein Vorteil der im folgenden vorgeschlagenen Regelungsstruktur ist, dass nicht nur der Wagenkörper in Querrichtung zentriert werden kann und die Wagenkörperquerbeschleunigung minimiert werden kann, sondern auch eine Wankbewegung des Wagenkörpers stabilisiert werden kann. Außerdem kann eine Wendebewegung des Wagenkörpers beeinflusst werden. Zusammenfassend können beispielhaft folgende Eigenschaften bzw. Ziele aufgezählt werden:

- niederfrequente Regelung der Querauslenkung des Wagenkörpers
- im Vergleich dazu höherfrequente Regelung der Wagenkörperquerbeschleunigung
- Stabilisierung der Wankbewegung des Wagenkörpers
- niederfrequente Regelung der Wendebewegung des Wagenkörpers um eine Hochachse
- im Vergleich dazu höherfrequente Regelung der Wendebeschleunigung am Wagenkörper.

Zur weiteren Erläuterung der Erfindung wird nachfolgend beispielhaft auf die beigefügte Zeichnung Bezug genommen. Die einzelnen Figuren der Zeichnung zeigen in schematischer Darstellung:

Fig. 1 eine Frontansicht eines auf einem Fahrwerk gefedert aufsitzenden Wagenkastens,

Fig. 2 den Wagenkasten nach Fig. 1 nach Einleitung einer Querstörung,

Fig. 3 die Darstellung nach Fig. 2, wobei aus Gründen der Übersichtlichkeit Teile weggelassen sind,

Fig. 4 eine Draufsicht eines Wagens mit zwei Fahrwerken und jeweils zwei antagonistisch angeordneten Queraktuatoren,

Fig. 5 eine Funktionsansicht der Anordnung nach Fig. 4,

Fig. 6 eine Funktionsansicht eines hydropneumatischen Aktuators zwischen einem Fahrwerk und dem Wagenkasten,

Fig. 7 eine Prinzipschaltung einer Regelung zur Einstellung der Querposition eines Wagenkastens.

In der Zeichnung bezeichnen gleiche Bezugszeichen gleiche und funktionsgleiche Teile.

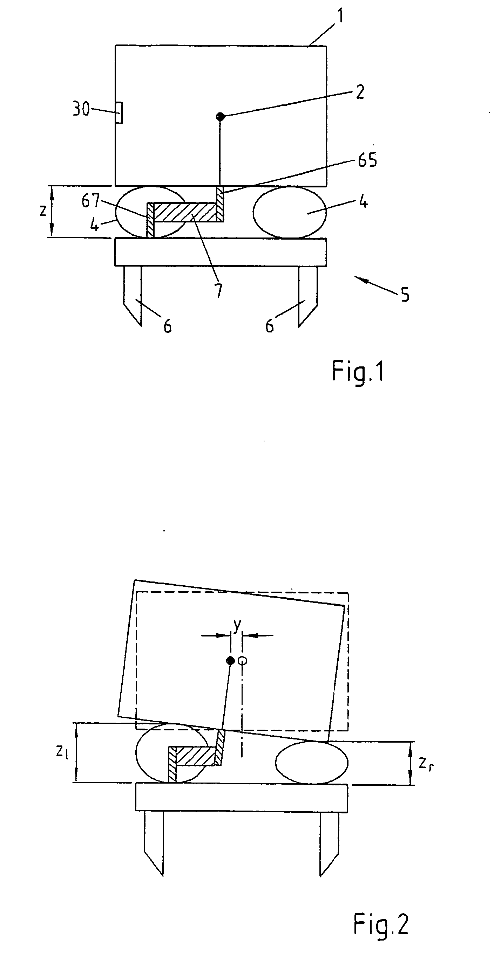

In Fig. 1 ist ein Schienenfahrzeug mit einem Wagenkasten 1 und einem Fahrwerk 5 dargestellt. Das Fahrwerk 5 weist zwei Räder 6 auf. Über ein rechtsseitiges und ein linksseitiges Sekundärfederelement 4, z.B. Luftfedern, zur Abfederung und Dämpfung von Stößen vorrangig in vertikaler Richtung ist das Fahrwerk 5 mit dem Wagenkasten 1 verbunden. Luftfedern haben eine wenn auch geringe Querfedersteifigkeit in Querrichtung, die die Notlaufeigenschaft des Systems sicherstellt. An dem Fahrwerk 5 ist eine sich nach oben erstreckende Befestigung 67 angebracht. An dem Wagenkasten 1 ist eine sich nach unten erstreckenden Befestigung 65 angebracht. Zwischen den Befestigungen 65, 67 ist ein Aktuator 7 angeordnet, über den die relative Querposition der Befestigungen 65, 67 und damit des Wagenkastens 1 und des Fahrwerks 5 eingestellt werden kann.

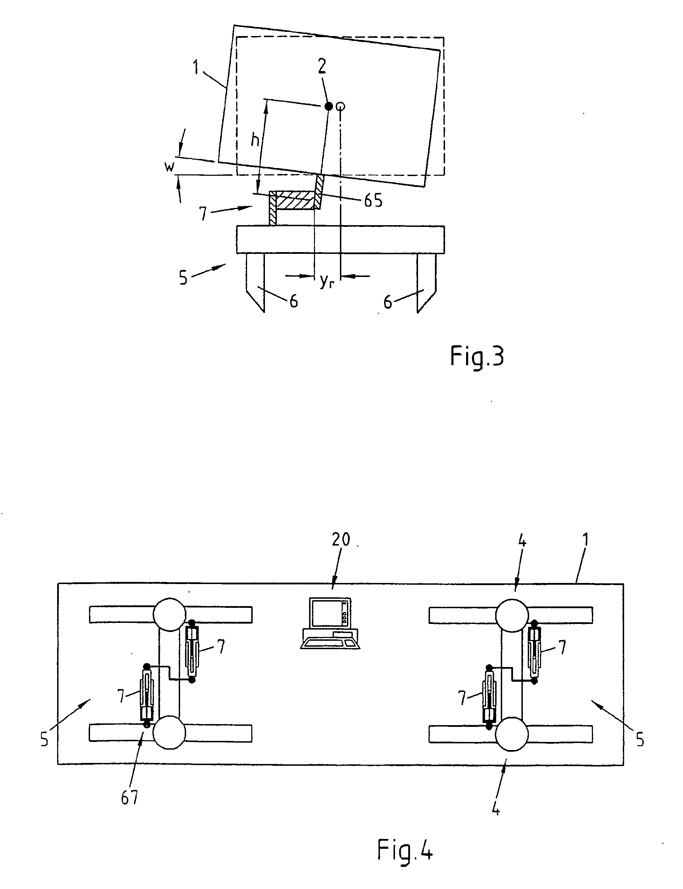

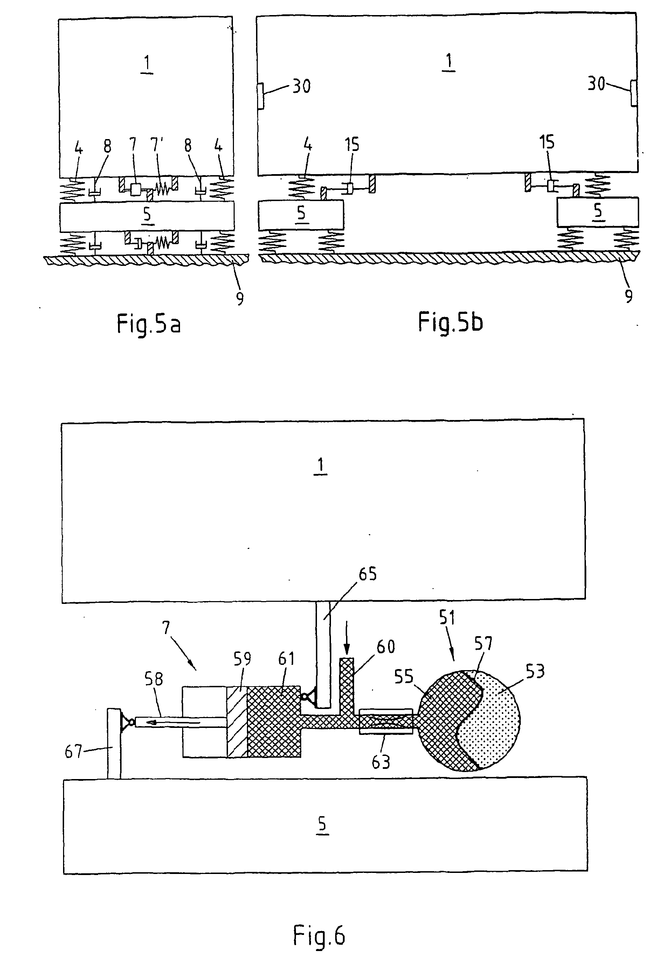

Fig. 5a und 5b zeigen schematisch in der Art eines Schaltbildes Komponenten eines mechanischen Modells der Ankopplung des Wagenkastens 1 an das Fahrwerk 5 und des Fahrwerks 5 an ein Gleis 9. Auf die Ankopplung des Fahrwerks 5 an das Gleis 9 wird nicht näher eingegangen. Zu dem eigentlichen Aktuator 7 ist ein Federelement 7' in Reihe geschaltet, das einer Steifigkeit der Sekundärfederelemente 4 in Querrichtung entspricht. Mit den Bezugszeichen 8 und 15 sind Dämpfungselemente zur Dämpfung von Stößen zwischen dem Wagenkasten 1 und dem Fahrwerk 5 bezeichnet. Der Aktuator 7 und das Federelement 7' sind gemäß Fig. 5a einendig am Wagenkasten 1 und mit ihren anderen Enden am Fahrwerk 5 befestigt; sie können jedoch auch in mechanischer Serienschaltung zwischen Fahrwerk 5 und Wagenkasten 1 wirken. Zur Symmetrierung der wirksamen Aktuatorkäfte sind gemäß Fig. 4 je Fahrwerk 5 zwei spiegelsymmetrisch angeordnete, quer zur Wagenkasten-Längsachse liegende Aktuatoren 7 vorgesehen, um eine momentenfreie Krafteinleitung an der in vertikaler Richtung orientierten Befestigung 65 zu erreichen.

Fig. 2 und 3 stellen dar, dass eine von dem befahrenen Gleis 9 über das Fahrwerk 5 angeregte Querstörung als auch eine aktiv eingeleitete Aktuatorenbewegung nicht nur eine Querverschiebung des Wagenkastens 1 sondern auch eine Wankbewegung und ggf. auch eine Wendebewegung des Wagenkasten 1 bewirkt. Zur sensorischen Erfassung des daraus folgenden Zustandes des Wagenkastens 1 und dessen Schwerpunktes (bzw. eines Punktes 2 auf einer Längsachse durch den Schwerpunkt) dienen neben Querpositionssensoren und Hochpositionssensoren (nicht bildlich dargestellt) auch Querbeschleunigungssensoren 30. Die Querpositionssensoren können an oder in einem Aktuator 7 angebracht sein und erfassen die Querposition des Wagenkasten 1 im Bereich von dessen Boden relativ zum zugehörigen Fahrwerk 5. Es genügt je ein Querpositionssensor an jedem Fahrwerk 5. Jeweils ein Paar Hochpositionssensoren ist vorzugsweise im Bereich der beiden Wagenkastenenden oder jeweils an einem Wagenkastende rechts und links an den beiden Wagenkasten-Längsseitenwänden angeordnet und erfasst jeweils in Fahrtrichtung rechts und links gesehen den vertikalen Abstand zwischen dem Wagenkasten 1 und dem jeweils zugeordneten Fahrwerk 5. Die Hochpositionssensoren können auch in die Sekundärfederelemente 4 integriert sein oder mit diesen zusammenwirken.

Die beiden Querbeschleunigungssensoren 30 sind im Bereich der längsseitigen Wagenkasten-Enden angeordnet und erfassen die im Fahrbetrieb auftretenden Querbeschleunigungen des Wagenkastens 1.

In Querrichtung halten die Aktuatoren 7, die aktiv die relative Querposition einstellen können und von einem Rechner 20 angesteuert werden können, den Wagenkasten 1. Diese Aktuatoren 7 haben wie in Fig. 5a und 5b dargestellt jeweils eine federnde und stoßdämpfende Eigenschaft und koppeln so den Wagenkasten 1 an das jeweilige Fahrwerk 5 an. Auf diese Weise werden Querstörungen aus dem Schienenweg weich in den Wagenkasten eingeleitet. Zur Erhöhung des Fahrkomforts erzeugen die Aktuatoren 7 dann Stellkräfte zur Einstellung der Querposition, die von der Regelungssoftware vorgegeben werden.

Die Aktuatoren 7 sind insbesondere hydropneumatische Aktuatoren, wie in Fig. 6 am Beispiel eines einzelnen Aktuators 7 dargestellt. Der Aktuator 7 weist einen Behälter 51 mit einer darin angeordneten Membran 57 auf. Die Membran 57 unterteilt den Behälter 51 in einen Gasraum 53, der ein Gas enthält, und in einen Flüssigkeitsraum 55, der Hydraulikflüssigkeit enthält. Der Flüssigkeitsraum 55 ist über eine Drossel 63 mit einem Druckraum 61 und einem Flüssigkeitsanschluss 60 verbunden. Über den Flüssigkeitsanschluss 60 kann Hydraulikflüssigkeit gesteuert über ein nicht dargestelltes Ventil in den Aktuator 7 eingeleitet oder aus diesem abgeleitet werden. Die Drossel 63 stellt einen Fließwiderstand dar, so dass der Aktuator 7 eine stoßdämpfende Eigenschaft hat. Entsprechend dem Flüssigkeitsdruck in dem Druckraum 61 wird über einen Kolben 59 und eine Kolbenstange 58, die an der Befestigung 67 angreift, die Querposition relativ zwischen dem Wagenkasten 1 und dem Fahrwerk 5 eingestellt.

Wie in Fig. 4 dargestellt ist sind an jedem Fahrwerk 5 zwei antagonistisch wirkende gleiche Aktuatoren 7 angeordnet. Bei gleichem Druck jeweils in dem Druckraum 61 der beiden Aktuatoren 7 kompensieren sich die Kräfte auf die Kolben 59. Die relative Querposition wird daher durch Herbeiführen einer Druckdifferenz verändert. Um eine Beschädigung oder Zerstörung der Aktuatoren 7 zu verhindern, ist die Summe der Drücke in den beiden Druckräumen 61 der beiden Aktuatoren 7 desselben Fahrwerks 5 auf einen Maximalwert begrenzt.

Bei einer alternativen Ausführungsform ist jedoch nur ein Aktuator 7 oder eine Mehrzahl von nicht gegeneinander wirkenden Aktuatoren 7 pro Fahrwerk vorgesehen.

Im folgenden wird nun ein Beispiel für eine Sensorik beschrieben. Es sollen ermittelt werden:

- die inertiale, d. h. absolute Wagenkastenquer- und Wendebeschleunigung im Schwerpunkt und
- die zu den beiden Drehgestellen relative Querverschiebung des Wagenkastens sowie dessen relativen Wende- und Wankwinkel.

Da eine direkte Messung der Querverschiebung des Wagenkastenschwerpunktes nicht praktikabel ist, werden andere Messgrößen herangezogen (siehe Fig. 2 und Fig. 3).

Im ersten Schritt wird dazu der relative Wendewinkel $\psi_r$ des Wagenkastens bezüglich des vorderen (v) und hinteren (h) Fahrwerks aus den relativen Querauslenkungen $y_{r\_v}$ und $y_{r\_h}$ der Aktuatoren, in denen sich jeweils ein Wegsensor befindet, berechnet:

$$\psi_r = \frac{y_{r\_v} - y_{r\_h}}{l_v + l_h}$$

$l_v$ und $l_h$ sind die Abstände der Aktuatoren in Längsrichtung vom Schwerpunkt.

Analog dazu lässt sich die Wendebeschleunigung

$$\ddot{\psi}$$

mit Hilfe von zwei Querbeschleunigungssensoren am Wagenkasten bestimmen. Mit zwei Punkten ist jeweils die zweite zeitliche Ableitung von Größen bezeichnet:

$$\ddot{\psi} = \frac{\ddot{y}_v - \ddot{y}_h}{l_v + l_h}$$

Im nächsten Schritt wird aus Messwerten der vertikalen Relativposition $z_r$ an den Sekundärfederelementen unter Berücksichtigung des Querabstandes $l_{q\_v}$ der Wegsensoren der relative Wankwinkel w bestimmt. Die Indizes *vr* und *vl* bedeuten "vorne rechts" und "vorne links":

$$w = \frac{z_{r\_vr} - z_{r\_vl}}{l_{q\_v}}$$

Durch Hinzunahme von vertikalen Wegsensoren an dem hinteren Drehgestell kann die Messung überprüft werden.

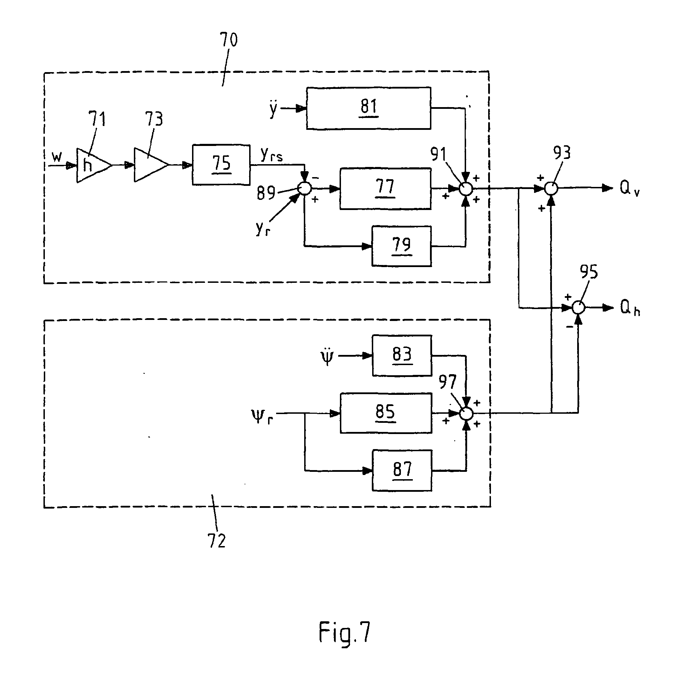

Nachfolgend kann die relative Querposition $y_r$ des Wagenkastens aus den Relativauslenkungen der Aktuatoren und den beiden zuvor bestimmten relativen Wank- und Wendewinkeln errechnet werden (Fig. 7).

$$y_r = \frac{y_{r\_v} + y_{r\_h}}{2} - z\,w - \psi_r\,\frac{l_v - l_h}{2}$$

z ist hierbei der arithmetische Mittelwert der vertikalen Relativpositionen rechts und links.

Die Wagenkastenquerbeschleunigung lässt sich mit analogen Überlegungen erfassen. Zwei am Wagenkasten befestigte Querbeschleunigungssensoren liefern die Wagenkastenquerbeschleunigung im Schwerpunkt, wenn die aus dem Wankwinkel und der Wank- und Wendebeschleunigung des Wagenkastens resultierenden Anteile bereinigt werden.

Dazu wird zunächst die absolute Wankbeschleunigung durch am Wagenkasten befestigte Vertikalbeschleunigungssensoren ermittelt. Vertikale Beschleunigungssensoren am hinteren Teil des Wagenkastens können die Messung stützen.

Wird weiterhin berücksichtigt, dass die Erdbeschleunigung über den absoluten Wankwinkel des Wagenkastens einen Anteil an den gemessenen Querbeschleunigungen am Wagenkasten liefert, so kann unter Approximation des absoluten Wankwinkels durch einen Tiefpaß gefilterten relativen Wankwinkel die Wagenkastenquerbeschleunigung ermittelt werden.

Zudem ist pro Aktuator ein Drucksensor vorgesehen, um die beiden gegeneinander wirkenden Aktuatoren jedes Fahrwerkes hinsichtlich der Summe der Drücke in den Aktuatoren zu regeln.

Mit der beschriebenen Sensorik kann eine Querpositionsregelung des Wagenkastens realisiert werden. Ziel dieser Regelung ist es, die Querpositionsregelung so auszuführen, dass keine Anfachung der Wankbewegung erfolgt.

Beispielhaft ist die Funktion einer Regelung der Querposition in Fig. 7 dargestellt.

Da eine konstante Querbeschleunigung, ebenso aber auch die bei Kurven auftretende nahezu konstante erste Ableitung der Querbeschleunigung nicht verwendet werden sollen, muss also die Querbeschleunigungsregelung Signale verwenden, die die zweite und/ oder zumindest eine höhere zeitliche Ableitung der Querbeschleunigung des Wagenkastenschwerpunktes enthalten bzw. daraus gewonnen sind.

Eine voreilende Berechnung zur Stabilisierung der Wankbewegung erfolgt vorzugsweise durch Verwendung von mindestens zwei unterschiedlichen Ableitungen der Querbeschleunigung des Wagenkastenschwerpunktes. Die Ermittlung dieser Ableitungssignale erfolgt insbesondere mittels eines regelungstechnischen Filters mit einer Ordnung, die größer ist als die Ordnung der maximal verwendeten Ableitungsstufe. Die Ordnung der Filterung wird unter anderem durch die Anregbarkeit des Wagenkastens zu Schwingungen bestimmt und hängt davon ab, wie nahe der von der Regelung berücksichtigte Frequenzbereich an Frequenzbereichen liegt, in denen Schwingungen angeregt werden können. Je näher der berücksichtigte Bereich an dem Anregungsbereich liegt und je leichter Schwingungen angeregt werden, desto höher sollte die Ordnung der Filterung sein.

Analog kann separat mit der Regelung der Wendebeschleunigung verfahren werden. Die Wendebeschleunigungsregelung verwendet vorzugsweise nicht die Wendebeschleunigung selbst, falls ein Aktuator mit integrierender Wirkung direkt angesteuert wird. Daher wird vorgeschlagen, die erste Ableitung der absoluten Wendebeschleunigung des Wagenkastenschwerpunktes für die Regelung zu verwenden.

In manchen Fällen der Praxis ist bezüglich der Wendebewegung keine zur Querbeschleunigungsregelung analoge voreilende Charakteristik notwendig und müssen daher nicht notwendigerweise weitere, höhere zeitliche Ableitungen der Wendebeschleunigung betrachtet werden. Bei Schienenfahrzeugen liegt dies z.B. daran, dass durch die Regelung nicht die Gefahr besteht, Schwingungen des Wagenkastens anzuregen. Es ist daher ein Filter kleinerer Ordnung ausreichend. Jedoch können höhere Ableitungsstufen optional verwendet werden, die wiederum Filtern mit höherer Ordnung entsprechen.

Die Positionsregelungen bezüglich der Querauslenkung des Schwerpunkts des Wagenkastens und des Wendewinkels des Wagenkastens bezüglich der Drehgestelle können sich eine integrierende Wirkung eines Aktuators zu Nutze machen und daher nur einen P (Proportional)- und einen D (Differential)- Anteil verwenden, der ebenfalls über einen Tiefpaßfilter mindestens 2. Ordnung realisiert ist. Ein Integralanteil kann ebenfalls verwendet werden, der jedoch vorzugsweise nur einen Anteil von typischerweise kleiner ein Zehntel an den Reglerausgangssignalen hat.

Die so berechneten Reglerausgangssignale werden unter Berücksichtigung der geometrischen Verhältnisse auf am Wagenkasten nahezu endseitig in Längsrichtung angeordnete Aktuatoren verteilt. Bei hydraulisch betätigbaren Aktuatoren werden beispielsweise Volumenströme einer Hydraulikflüssigkeit für zumindest einen Aktuator vorne ($Q_v$) und einen Aktuator hinten ($Q_h$) am Wagenkasten berechnet und eingestellt, die je nach Vorzeichen vom Aktuator aus gesehen zu- oder abfließen sollen. Sind zwei Aktuatoren jeweils gegeneinander wirkend angeordnet, so wird das ermittelte Stellsignal mit unterschiedlichen Vorzeichen auf den rechten und linken Aktuator verteilt.

Es kann gefordert sein, dass nicht die relative Wagenkastenquerposition konstant gehalten werden soll, sondern die Aktuatoren auch bei Kurvenfahrt in ihrer Mittelstellung stehen sollen. Auf diese Weise steht immer der gesamte Aktuatorweg zur Verfügung um dynamische Querstörungen ausregeln zu können. In diesem Fall wird ein Sollsignal für die Wagenkastenquerposition so berechnet, dass dies gewährleistet wird. Maßgeblich hierbei ist der sich aus der Kurvenfahrt stationär ergebende Wankwinkel des Wagenkastens. Durch Umkehrrechnung kann dies berechnet werden.

Dieses Sollsignal wird wie noch anhand von Fig. 7 beschrieben wird niederfrequent gefiltert und wirkt nicht auf einen Zweig der Regelung, der Ableitungen der Querbeschleunigung verarbeitet. Auf diese Weise wird das Sollsignal niederfrequent ohne negativen Einfluß auf die Beschleunigungsregelung verarbeitet.

Eine Summendruckregelung gegeneinander wirkender Aktuatoren (wie oben beschrieben) kann zu der in Fig. 7 dargestellten Regelungsstruktur additiv hinzugefügt werden. Dabei wird der gemittelte Summendruck der beiden jeweils gegeneinander wirkenden Aktuatoren zur Regelung verwendet. Übersteigt oder unterschreitet der Summendruck einen Sollwert, so wird z. B. der geforderte Ölvolumenstrom für beide Aktuatoren gleichsinnig um einen der Abweichung proportionalen Anteil reduziert oder erhöht. Das Begrenzen des Summendrucks nach oben verhindert eine Zerstörung der Aktuatoren. Das Begrenzen nach unten gewährleistet eine stabile Regelung, die nicht durch Veränderung der Eigenschaften, insbesondere der Dämpfungseigenschaften, der Aktuatoren destabilisiert wird.

Insbesondere wird die Soll-Querposition des WagenkastenSchwerpunktes 2 als gefiltertes Produkt aus dem Wankwinkel w und dem Abstand h des Schwerpunktes 2 vom Angriffspunkt des Aktuators 7 an der Befestigung 65 ermittelt (Fig. 3).

Links im oberen Block 70 in Fig. 7 beginnt der Regelungszweig zur Generierung eines Sollwertes $y_{rs}$ für eine Relativposition des Wagenkastenschwerpunktes in Querrichtung. Hierzu wird der Wankwinkel w als Eingangsgröße verwendet. Beispielsweise soll bei einer Kurvenfahrt der Aktuator seine Mittelstellung einnehmen bzw. beibehalten, so dass beidseitig der Mittelstellung der volle Aktuatorweg zur Verfügung steht.

Daraus gewonnene Signale werden zu Volumenstrom-Steuersignalen $Q_v$ für den hydraulischen Aktuator 7 des vorderen Fahrwerks 5 und $Q_h$ für den hydraulischen Aktuator 7 des hinteren Fahrwerks 5 verarbeitet, wobei diese Steuersignale hydraulische Ventile steuern, welche in Versorgungsleitungen zwischen einem oder mehreren Hydraulikflüssigkeit enthaltenden Vorratsbehältern und den einzelnen Aktuatoren 7 geschaltet sind.

Als weitere Eingangsgröße wird die Wagenkastenquerbeschleunigung einem elektrischen Filter 81 zugeführt. Das Filter 81 liefert sowohl für höherfrequente als auch für niederfrequente Anteile der gemessenen bzw. abgeleiteten Querbeschleunigungsschwingungen sehr geringe Anteile der Reglerausgangssignale, vorzugsweise sehr viel kleiner als 10%. Dadurch werden insbesondere die Schwingungen gedämpft und/oder verhindert, die in dem dazwischenliegenden mittleren Frequenzbereich liegen (typischerweise 3 - 5 Hz) und die als besonders störend empfunden werden oder als solche definiert oder normiert sind. Außerdem kann auf diese Weise Energie für das Einstellen der Stellglieder (Aktuatoren) gespart werden, da eine in einem engeren Frequenzbereich arbeitende Regelung weniger Energie benötigt und andererseits ein effizienter Reglereingriff in den Frequenzbereich gewährleistet werden, bei der der stärkste negative Effekt auf den Komfort zu erwarten ist.

Der im linken Teil des Blockes 70 beginnende Regelungszweig weist einen mit dem Bezugszeichen 71 bezeichneten Multiplikator auf, der das Eingangssignal Wankwinkel w mit der Größe h multipliziert. h ist der in Figur 3 dargestellte Abstand zwischen dem Aktuator und dem Wagenkastenschwerpunkt 2. Das Ausgangssignal des Multiplikators 71 wird auf ein Regelungsglied 73 gegeben, das einstellbar ist. Es kann so eingestellt werden, dass der Regelungszweig keinerlei Wirkung hat, d.h. insbesondere bei Kurvenfahrt keine Rückstellung einer durch Fliehkräfte hervorgerufene Veränderung der Relativposition zwischen Wagenkasten und Fahrwerk stattfindet. Es kann aber auch so eingestellt werden, dass eine solche Rückstellung möglich ist, bzw. dass der Regelungszweig aktiv ist. Ein Ausgangssignal des Regelungsgliedes 73 wird einem Tiefpaßfilter 75 zugeführt. Das Tiefpaßfilter 75 hat die Funktion, im Wesentlichen nur die langsamen, d.h. niederfrequenten Anteile der Wankbewegungen des Wagenkastens für die Regelung nutzbar zu machen. Zum Beispiel kann eine Abbruchkante des Tiefpaßfilters 75 auf einen Wert zwischen 0,1 und 0,5 Hz eingestellt sein. Am Ausgang des Tiefpaßfilters 75 steht das Sollsignal $y_{rs}$ für die Relativposition des Wagenkastens zur Verfügung. In einem Differenzglied 89 wird das Sollsignal $y_{rs}$ mit dem gemessenen Wert $y_r$ verglichen.

Das Differenzsignal wird zwei elektrischen Filtern 77 und 79 zugeführt, wobei das Filter 77 niederfrequente Signale liefert, die der Abweichung vom Sollwert der Relativposition des Wagenkastenschwerpunktes proportional sind und auch proportional zur ersten zeitlichen Ableitung des Differenzsignals sind. Das Filter 77 arbeitet höherfrequent als das Tiefpaßfilter 75. Es hat möglichst keine integrierende Wirkung. Das Filter 77 gewährleistet zusammen mit dem Filter 79 die Querpositionsregelung des Wagenkastens. Höherfrequente Signale, insbesondere mit einer größeren Frequenz als 2 Hz, liefert das Filter 77 nicht. Damit ist eine stabile und zuverlässige Querpositionsregelung gewährleistet.

Das Filter 79 hat eine integrierende Wirkung. Das Filter 79 trägt wie Filter 77 zur Querpositionsregelung des Wagenkastens bei. Der Anteil des Filters 79 ist jedoch gegenüber Filter 77 sehr klein und macht vorzugsweise weniger als ein Zehntel des Anteils des Filters 77 am Reglerausgangssignal aus. Der Anteil des Filters 79 ist dazu geeignet, einen Offset bei der Ansteuerung hydraulischer Ventile zu eliminieren. Das Filter ist auch niederfrequenter wirksam als das Filters 77. Die Ausgangsignale der Filter 77, 79, 81 werden einem Summierglied 91 zugeführt und ergeben so ein Summensignal, das wiederum einem Summierglied 93 und einem Differenzbildungsglied 95 zugeführt wird.

Wie in dem unteren gestrichelt umrahmten Block 72 in Fig. 7 dargestellt ist wird ein Wendebeschleunigungssignal einem weiteren Filter 83 zugeführt, welches sowohl für höherfrequente als auch für niederfrequente Anteile der ermittelten Wendebeschleunigung sehr geringe Anteile liefert (vorzugsweise kleiner 10% der Reglerausgangssignale). Dadurch werden analog zur oben beschriebenen Regelung der Querposition im Block 70 Schwingungen in einem mittleren, besonders störenden Bereich von z.B. 3 - 5 Hz ausgeregelt. Auf die oben beschriebenen Vorteile wird hingewiesen. Außerdem wird ein dem ermittelten Wendewinkel entsprechendes Signal einem elektrischen Filter 85 und parallel dazu einem Filter 87 zugeführt. Filter 85 liefert niederfrequent Signale, die dem relativen Wagenkastenwendewinkel proportional sind und die proportional zur ersten zeitlichen Ableitung des Winkels sind. Das Filter trägt zur Regelung der Wendeposition des Wagenkastens bei. In dem mittleren Frequenzbereich, in dem das Filter 83 besonders wirksam ist (s.o.), oder darüber werden keine Signale geliefert. Filter 87 trägt wie Filter 85 zur Einstellung der Wendeposition des Wagenkastens bei. Der Anteil dieses Filters gegenüber Filter 85 soll sehr klein sein (z.B. kleiner als 10%) und ist dazu geeignet, einen Offset bei der Ansteuerung hydraulischer Ventile zu eliminieren. Das Filter 87 ist auch niederfrequenter wirksam als das Filter 85.

Wie auch die Filter 77, 79 und 81 sollten sich die Filter 83, 85, 87 nicht oder möglichst wenig in ihrem wirksamen Frequenzbereichen überlappen, d.h. in den Frequenzbereichen, in denen sie für die Reglerausgangssignale wirksame Auteile liefern.

Die Ausgangssignale der Filter 83, 85 und 87 werden einem Summierglied 97 zugeführt, das wiederum dem Summierglied 93 und dem Differenzbildungsglied 95 zugeführt wird.

Das Summierglied 93 gibt das Ausgangssignal $Q_v$ aus. Das Differenzbildungsglied 95 gibt das Ausgangssignal $Q_h$ aus.

Optional ist jeweils zwischen die Summierglieder 91, 97 und das Summierglied 93 bzw. das Differenzbildungsglied 95 ein Verstärker zu Berücksichtigung der Geometrie- und Masseverhältnisse des zu steuernden Fahrzeuges vorgesehen.

Insgesamt wird so erreicht, dass mit messtechnisch geringem Aufwand die für ein angenehmes Fahrempfinden wesentlichen Faktoren erfasst und eine stabile und ruckfreie Positionierung des Wagenkasten im Fahrbetrieb erreicht wird. Insbesondere können auch auftretende Vibrationen am Wagenkasten eliminiert und die unter Umständen daraus folgende Anregung einer Wankbewegung des Wagenkasten beseitigt werden. Zudem kann durch eine Berücksichtigung der Verkopplung zwischen Wank- und Querbewegung eine Stabilisierung der Wankbewegung erreicht werden.

## Patentansprüche

1. Verfahren zur Positionseinstellung eines Wagenkörpers (1) eines spurgeführten Fahrzeuges, insbesondere eines Schienenfahrzeuges, relativ zu zumindest einem Fahrwerk (5) des Fahrzeuges, bei dem eine Querbeschleunigung des Wagenkörpers (1) quer zu einer Wagenkörper-Längsachse ermittelt wird und abhängig von der ermittelten Querbeschleunigung eine Querposition des Wagenkörpers (1) relativ zu dem zumindest einen Fahrwerk (5) eingestellt wird, und bei dem eine erste Querbeschleunigung des Wagenkörpers (1) in einer ersten Querrichtung quer zu der Wagenkörper-Längsachse und eine zweite Querbeschleunigung des Wagenkörpers (1) in einer zweiten Querrichtung quer zu der Wagenkörper-Längsachse und quer zur ersten Querrichtung ermittelt werden,
**dadurch gekennzeichnet,**
**dass** die zweite und/oder zumindest eine höhere zeitliche Ableitung der ersten und/oder zweite η Querbeschleunigung des Wagenkörpers (1) gebildet wird und davon abhängig die Querposition des Wagenkörpers (1) eingestellt wird.

2. Verfahren nach Anspruch 1, wobei die erste und/oder zweite Querbeschleunigung des Wagenkörpers (1) für zumindest zwei verschiedene Stellen und/oder Bereiche in Längsrichtung des Wagenkörpers (1) ermittelt wird und abhängig davon die relative Querposition des Wagenkörpers (1) an zwei verschiedenen Stellen in Längsrichtung des Wagenkörpers (1) eingestellt wird.

3. Verfahren nach Anspruch 2, wobei aus den ermittelten Werten der Querbeschleunigungen des Wagenkörpers (1) an den zumindest zwei verschiedenen Stellen eine Wendebeschleunigung des Wagenkörpers (1) um eine Hochachse berechnet wird.

4. Verfahren nach Anspruch 2 oder 3, wobei aus den ermittelten Werten der Querbeschleunigungen des Wagenkörpers (1) an den zumindest zwei verschiedenen Stellen und/oder Bereichen die erste und/oder zumindest eine höhere zeitliche Ableitung einer Wendebeschleunigung des Wagenkörpers (1) um eine Hochachse berechnet wird und davon abhängig die relative Querposition an zwei verschiedenen Stellen in Längsrichtung des Wagenkörpers (1) eingestellt wird.

5. Verfahren nach einem der Ansprüche 1 bis 4, wobei bezüglich der relativen Querposition des Wagenkörpers (1) Frequenzbereiche betrachtet und beeinflusst werden mit einer Frequenz kleiner oder gleich 10 Hz, insbesondere kleiner oder gleich 7 Hz.

6. Verfahren nach einem der Ansprüche 1 bis 5, wobei bezüglich der Querposition des Wagenkörpers (1) Frequenzbereiche betrachtet und beeinflusst werden mit einer Frequenz kleiner oder gleich 4 Hz, insbesondere kleiner oder gleich 2 Hz, und wobei die Querbeschleunigung des Wagenkörpers (1) in einem Frequenzbereich mit einer höheren Frequenz ausgewertet wird und bei der Einstellung der relativen Querposition berücksichtigt wird.

7. Verfahren nach einem der Ansprüche 1 bis 6, wobei bei einer Ermittlung einer Stellgröße zur Einstellung der relativen Querposition des Wagenkastens (1) zumindest eine Kenngröße des Bewegungsverhaltens des Wagenkastens (1) berücksichtigt wird, insbesondere eine Kenngröße für die Anregung von Schwingungen des Wagenkastens (1), und wobei durch wiederholte Auswertung von Messgrößen und durch zeitliche Extrapolation des Bewegungsverhalten des Wagenkastens (1) ein möglicher zukünftiger Bewegungszustand des Wagenkastens (1) berechnet wird und bei der Ermittlung der Stellgröße berücksichtigt wird.

**Claims**

1. A method for the position adjustment of a car body (1) of a track-guided vehicle, in particular a rail vehicle, with regard to at least one undercarriage (5) of the vehicle, whereby a transversal acceleration of the car body (1) transversal to a car body longitudinal axis is determined, and depending on the transversal acceleration, a transversal position of the car body (1) with regard to the minimum of one undercarriage (5) is adjusted, and whereby a first transversal acceleration of the car body (1) is determined in a first transversal direction transversal to the car body longitudinal axis and a second transversal acceleration of the car body (1) is determined in a second transversal direction transversal to the car body (1) longitudinal axis and transversal to the first transversal direction,

**characterised in that** the second and/or at least a higher temporal derivation of the first and/or second transversal acceleration of the car body (1) is formed, and, depending on this, the transversal position of the car body (1) is adjusted.

2. The method according to Claim 1, whereby the first and/or second transversal acceleration of the car body (1) is determined for at least two different places and/or areas in the longitudinal direction of the car body (1), and, dependent on this, the relative transversal position of the car body (1) is adjusted at two different positions in the longitudinal direction of the car body (1).

3. The method according to Claim 2, whereby, from the determined values of the transversal accelerations of the car body (1), at the minimum of two different places, a turn acceleration of the car body (1) about a high axis is calculated.

4. The method according to Claim 2 or 3, whereby, from the determined values of the transversal accelerations of the car body (1), at the minimum of two different places and/or areas, the first and/or at least one higher temporal derivation of a turn acceleration of the car body (1) about a high axis is calculated, and, dependent on this, the relative transversal position is adjusted at two different places in the longitudinal direction of the car body (1).

5. The method according to one of Claims 1 to 4, whereby, with regard to the relative transversal position of the car body (1), frequency ranges are considered and influenced with a frequency less than or equal to 10 Hz, in particular less than or equal to 7 Hz.

6. The method according to one of Claims 1 to 5, whereby, with regard to the relative transversal position of the car body (1), frequency ranges are considered and influenced with a frequency less than or equal to 4 Hz, in particular less than or equal to 2 Hz, and whereby the transversal acceleration of the car body (1) is evaluated in a frequency range with a higher frequency and is taken into consideration during the adjustment of the relative transversal position.

7. The method according to one of Claims 1 to 6, whereby, during a determination of a manipulated variable for the adjustment of the relative transversal position of the car body (1), at least one characteristic of the movement behaviour of the car body (1) is taken into consideration, in particular a characteristic for the excitation of oscillations of the car body (1), and whereby, by repeated evaluation of measured values and by temporal extrapolation of the movement behaviour of the car body (1), a possible future movement state of the car body (1) is calculated and taken into consideration in the determination of the manipulated variable.

## Revendications

1. Procédé de réglage de la position d'une caisse de voiture (1) d'un véhicule guidé sur une voie, en particulier d'un véhicule ferroviaire, par rapport à au moins un train roulant (5) du véhicule, dans lequel une accélération transversale de la caisse de voiture (1), transversalement par rapport à l'axe longitudinal de la caisse de voiture, est déterminée et, en fonction de l'accélération transversale déterminée, une position transversale de la caisse de voiture (1) par rapport au train roulant (5) est réglée, et dans lequel une première accélération transversale de la caisse de voiture (1) dans une première direction transversale transversalement par rapport à l'axe longitudinal de la caisse de voiture et une deuxième accélération transversale de la caisse de voiture (1) dans une deuxième direction transversale transversalement par rapport à l'axe longitudinal de la caisse de voiture et transversalement par rapport à la première direction transversale sont déterminées,
   **caractérisé en ce qu'**on établit la dérivée temporelle d'ordre deux et / ou au moins une dérivée temporelle d'ordre supérieur de la première et / ou de la deuxième accélération transversale de la caisse de voiture (1) et, en fonction de ceci, on règle la position transversale de la caisse de voiture (1).

2. Procédé selon la revendication 1, dans lequel la première et / ou deuxième accélération transversale de la caisse de voiture (1) est déterminée pour au moins deux emplacements et / ou sections différentes dans la direction longitudinale de la caisse de voiture (1) et, en fonction de ceci, la position transversale relative de la caisse de voiture (1) est réglée à deux emplacements différents dans la direction longitudinale de la caisse de voiture (1).

3. Procédé selon la revendication 2, dans lequel, à partir des valeurs déterminées des accélérations transversales de la caisse de voiture (1) au niveau des au moins deux emplacements différents, on calcule une accélération de braquage de la caisse de voiture (1) autour d'un axe vertical.

4. Procédé selon l'une quelconque des revendications 2 ou 3, dans lequel, d'après les valeurs déterminées des accélérations transversales de la caisse de voiture (1) au niveau des au moins deux emplacements et / ou sections différentes, on calcule la dérivé temporelle d'ordre un et / ou au moins une dérivée temporelle d'ordre supérieur de l'accélération de braquage de la caisse de voiture (1) autour d'un axe vertical et, en fonction de cela, on règle à deux emplacements différents dans la direction longitudinale de la caisse de voiture (1) la position transversale relative.

5. Procédé selon l'une quelconque des revendications 1 à 4, dans lequel, concernant la position transversale relative de la caisse de voiture (1), on prend en considération et on influence les gammes de fréquences avec une fréquence inférieure ou égale à 10 Hz, en particulier inférieure ou égale à 7 Hz.

6. Procédé selon l'une quelconque des revendications 1 à 5, dans lequel, concernant la position transversale de la caisse de voiture (1), on prend en considération et on influence les gammes de fréquences avec une fréquence inférieure ou égale à 4 Hz, en particulier inférieure ou égale à 2 Hz, et dans lequel l'accélération transversale de la caisse de voiture (1) est évaluée et prise en considération dans une gamme de fréquences avec une fréquence supérieure, lors du réglage de la position transversale relative.

7. Procédé selon l'une quelconque des revendications 1 à 6, dans lequel, lors de la détermination d'une grandeur de commande pour régler la position transversale relative de la caisse de voiture (1), on prend en considération au moins une grandeur caractéristique du comportement cinématique de la caisse de voiture (1), en particulier une grandeur caractéristique de l'excitation de vibrations de la caisse de voiture (1), et dans lequel, grâce à l'évaluation répétée de grandeurs de mesure et à l'extrapolation temporelle du comportement cinématique de la caisse de voiture (1), on calcule un état de déplacement futur possible de la caisse de voiture (1), que l'on prend alors en considération lors de la détermination de la grandeur de commande.

Fig.1

Fig.2

Fig.3

Fig.4

Fig.5a

Fig.5b

Fig.6

Fig.7